# EUROPEAN PATENT APPLICATION

(11) **EP 4 624 374 A1**
(43) Date of publication of application: **01.10.2025**
(21) Application number: 24167726.9
(22) Date of filing: 28.03.2024
(51) Int. Cl.: B65G 1/04

(54) **STORAGE SYSTEM**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

A storage system (1700) comprising a three-dimensional grid (100) for storing storage containers therein and a rail network, the rail network provided for movement of a storage container handling vehicle at the top of the three-dimensional grid. The three-dimensional grid comprises at least one storage column of a first type extending vertically from the rail network (116), each of the at least one storage columns of the first type (1302) configured to receive individual storage containers therein. The three-dimensional grid further comprises at least one storage column of a second type (1304) extending vertically from the rail network (116), each of the at least one storage columns of the second type configured to receive multi-container frames for pluralities of storage containers therein. Each of the at least one storage columns of the first type comprises a first opening, the first opening having a first cross-sectional area for receiving individual storage containers therein. Each of the at least one storage columns of the second type comprises a second opening, the second opening having a second cross-sectional area which is larger than the first cross-sectional area for receiving multi-container frames therein.

## Description

### TECHNICAL FIELD

The present disclosure relates to a storage system. More particularly, the present disclosure relates to a storage system comprising a three-dimensional grid for storing storage containers therein and a rail network.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Known grid-based systems may however be slow and cumbersome to manage or rearrange, and may in some cases have a limited height. For example, it can be slow and inefficient to retrieve containers which are buried deep in the grid. Developments in the design and operation of such grids and associated robots can significantly improve the operation of automated storage and retrieval systems. It would be advantageous to improve the design of such grids and associated robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with the multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig 12. shows a robotic container-handling vehicle lifting a container out of a multi-container frame;
Fig. 13 shows a plan view of a three-dimensional storage grid comprising different types of storage columns, according to an example of the present disclosure;
Fig. 14 shows a side view of a storage system comprising different types of storage columns, according to an example of the present disclosure;
Fig. 15 shows a perspective view of the storage system of Fig. 14;
Fig. 16 shows a plan view of a storage system having storage areas comprising different types of storage columns from one another, according to an example of the present disclosure;
Fig. 17A shows a side view of a storage system having storage areas comprising different types of storage columns from one another, according to an example of the present disclosure;
Fig. 17B shows a perspective view of the storage system of Fig. 17A;
Fig. 18A shows a plan view of a storage system having storage areas comprising different types of storage columns from one another, according to a further example of the present disclosure;
Fig. 18B shows a perspective view of the storage system of Fig. 18A;
Fig. 19 shows a perspective view of a storage system having storage areas comprising different types of storage columns from one another, according to a further example of the present disclosure;
Fig. 20A shows a perspective view of a storage system having storage areas comprising different types of storage columns from one another, according to a further example of the present disclosure;
Fig. 20B shows a side view of the storage system of Fig. 20A;
Fig. 21 shows a side view of a storage system having storage areas comprising different types of storage columns from one another, according to a further example of the present disclosure; and
Fig. 22 shows a method of operating a storage system according to any of Figs. 16 to 21.

### DETAILED DESCRIPTION

In overview, the present disclosure relates to a storage system comprising a three-dimensional grid for storing storage containers therein, wherein the three-dimensional grid comprises storage columns of a first type, and storage columns of a second type. The storage columns of the first type are for storage of individual storage containers therein, e.g. individual storage containers stacked directly on top of one another. The storage columns of the first type may have inner dimensions sized to provide support to storage containers stacked directly on top of one another therein. The storage columns of the second type are for storage of multi-container frames therein, e.g. multi-container frames stacked on top of one another. Each of the multi-container frames may themselves be configured to receive a plurality of storage containers therein. The storage columns of the second type may have inner dimensions sized to provide support to multi-container frames stacked therein. In one example, the multi-container frames may comprise stacker frames which are configured to receive storage containers stacked on top of one another therein. In another example, the multi-container frames may be configured to receive storage containers arranged side-by-side therein.
According to an exemplary example there is provided a storage system comprising a three-dimensional grid for storing storage containers therein and a rail network, the rail network provided for movement of a storage container handling vehicle along the three-dimensional grid, the three-dimensional grid comprising:
at least one storage column of a first type extending vertically from (e.g. extending beneath) the rail network, each of the at least one storage columns of the first type configured to receive individual storage containers therein; and
at least one storage column of a second type extending vertically from (e.g. extending beneath) the rail network, each of the at least one storage columns of the second type configured to receive multi-container frames for pluralities of storage containers therein;
wherein each of the at least one storage columns of the first type comprises a first opening, the first opening having a first cross-sectional area configured for supporting individual storage containers therein; and
wherein each of the at least one storage columns of the second type comprises a second opening, the second opening having a second cross-sectional area which is larger than the first cross-sectional area configured for supporting multi-container frames therein. The rail network may be provided at the top of the three-dimensional grid, e.g. such that the storage container handling vehicle is moveable above the three-dimensional grid. The column(s) of the first type may abut column(s) of the second type, e.g. in side-by-side relationship.

By using multi-container frames (such as stacker frames) which are each configured to receive a plurality of storage containers therein, management and rearranging of the contents of the three-dimensional grid of storage containers becomes simpler and quicker. In particular, pluralities of storage containers can be moved in one go by moving the multi-container frame in which the pluralities of storage containers are stored. Therefore, by grouping storage containers containing similar or identical products in the same multi-container frames as one another, the similar or identical products can be moved in one go, even if they are not all stored in the same single storage container. Furthermore, if the contents of the three-dimensional grid need to be rearranged, for example to retrieve storage containers which are buried deeper in the grid and under other storage containers, the speed of the rearranging operation is increased because multiple storage containers can be moved at a time by moving the multi-container frames in which the storage containers are received.

All storage containers used in the system according to the present disclosure may be identical to one another, and may be stackable on top of one another. This may improve compatibility and ease of operation of the system. Similarly all multi-container frames used in the system according to the present disclosure may be identical to one another, and may be stackable on top of one another. As mentioned above, each multi-container frame of the present disclosure may be configured to receive a plurality of storage containers arranged side-by-side, for example four storage containers arranged side-by-side. In other examples, the multi-container frames may comprise stacker frames, configured to receive a plurality of storage containers stacked on top of one another therein. Where the multi-container frames comprise stacker frames, the maximum height of the three-dimensional grid may be increased. In particular, the multi-container frames may provide additional structural support, such that the stack height can be increased. Additionally, because the use of stacker frames would increase the speed of digging into the grid, a taller grid could be used while maintaining acceptable digging times.

Advantageously, by employing a system in which columns of the first type (configured to receive storage containers stacked directly on top of one another) are used alongside columns of the second type (configured to receive multi-container frames stacked on top of one another), system versatility is yet further increased. For example, where products can be grouped together, they may be grouped into multi-container frames and stored columns of the second type. On the other hand, where products are required to be in standalone storage containers rather than in stacker frames, they can be stored column of the second type.

### Automated storage and retrieval system overview

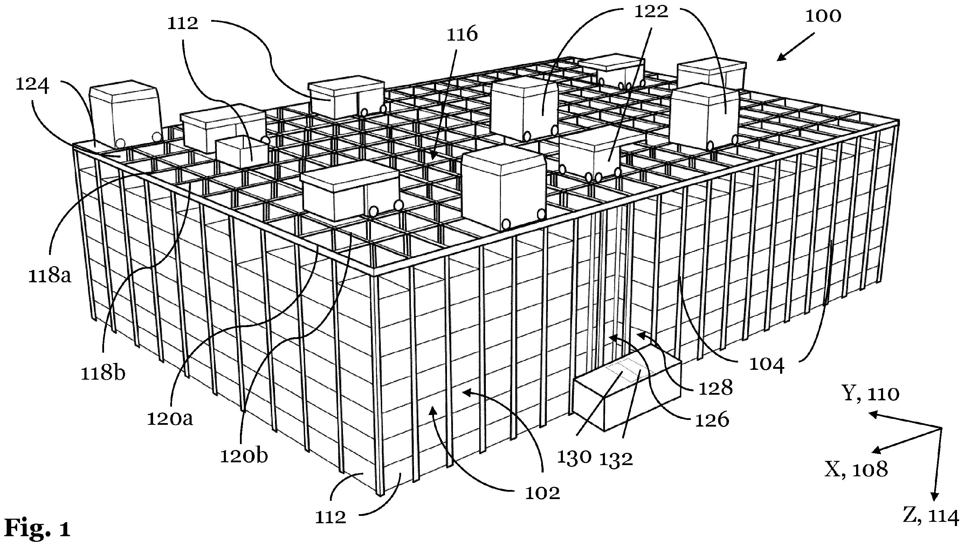

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

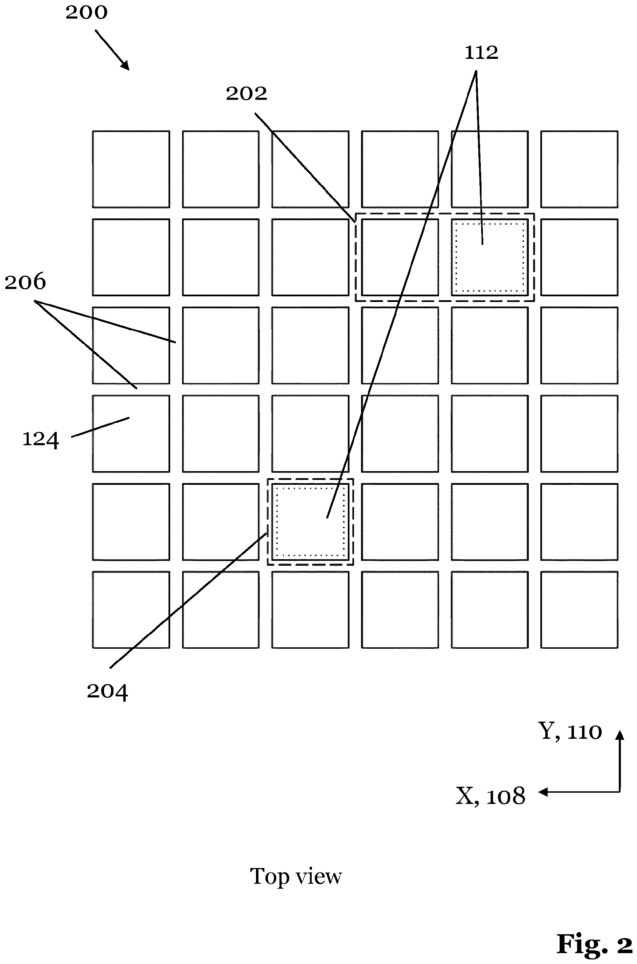

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

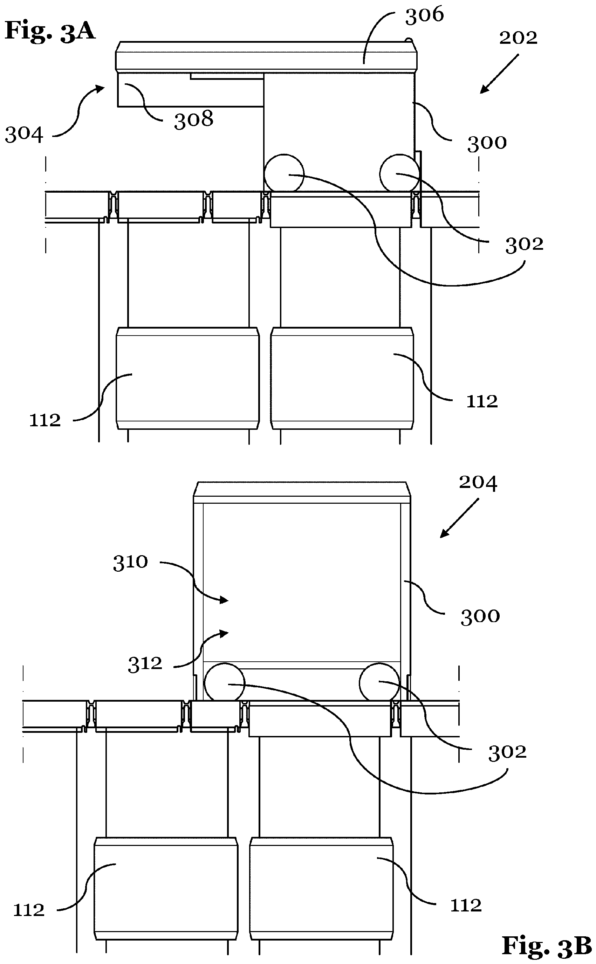

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

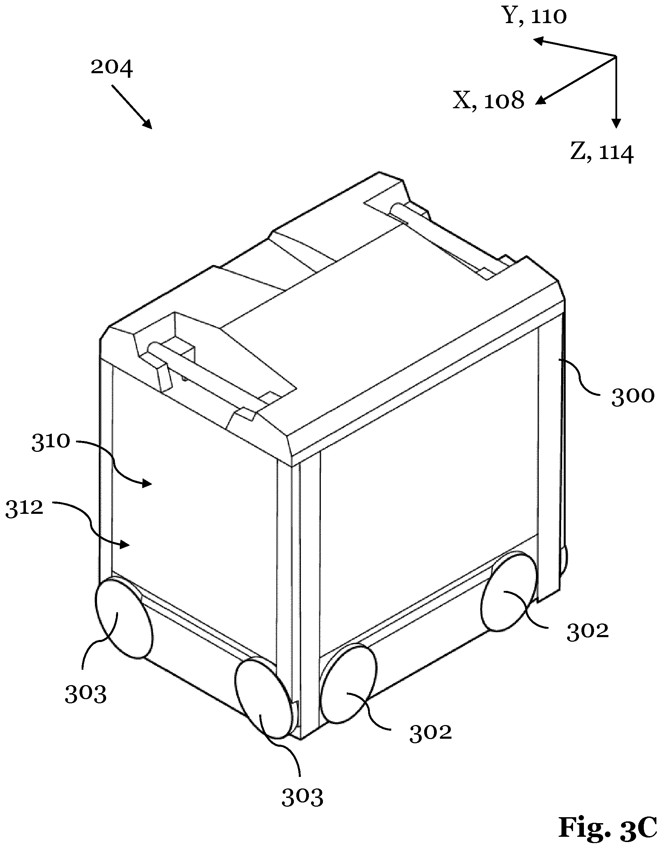

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

Fig. 3D shows more detail of the gripping device 308. As shown the gripping device includes four gripping actuators 309, located at the respective corners of the gripping device. In other examples, more than four gripping actuators, or fewer than four gripping actuators, may be used. Each gripping actuator is configured to engage a respective corner of a storage container 112, for lifting of the storage container 112. The gripping device 308 of Fig. 3D is shown attached to an internal cavity robot 204. However, as the reader will understand, the gripping device 308 could alternatively be attached to a cantilever robot 202.

### Control and monitoring system

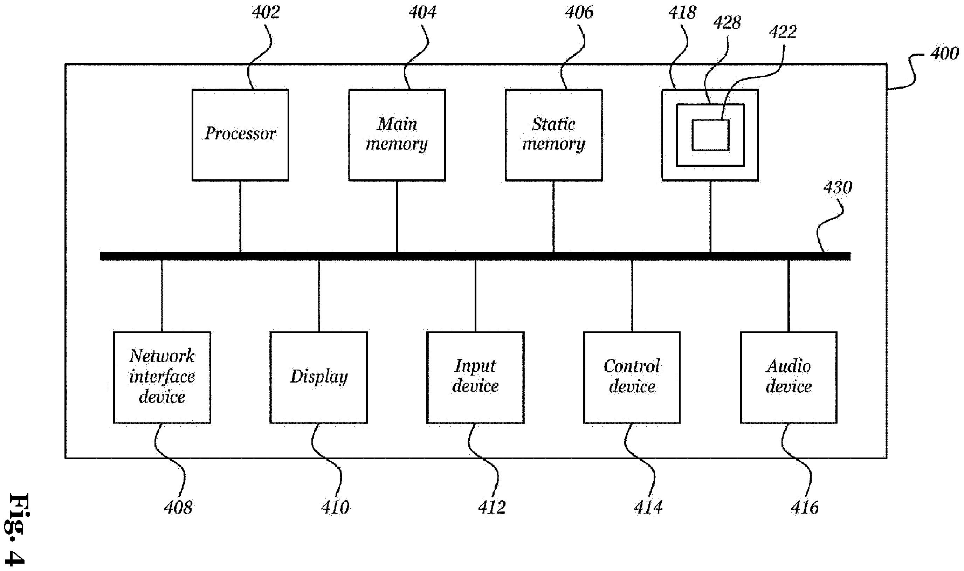

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Multi-container frames

The present disclosure uses multi-container frames, in other words frames or containers that are themselves configured to hold a plurality of storage containers 112. These multi-container frames can be stored and handled in the automated storage and retrieval system of the present disclosure in the same manner as the storage containers 112 referenced above in relation to Fig. 1-4. A multi-container frame may be configured to accommodate between two and six storage containers 112 in a typical implementation, although larger multi-container frames are possible.

In the exemplary examples that follow, the multi-container frames are configured to accommodate a plurality of storage containers 112 within them, stacked on top of one another. In that case, the multi-container frame may be referred to as a "stacker frame" because the storage containers 112 held within it are stacked on top of one another. For simplicity, the remainder of this disclosure will focus on this form of multi-container frame. However, it will be appreciated that in other implementations (not shown in the accompanying Figures), the multi-container frame may accommodate a plurality of storage containers 112 side-by-side or otherwise arranged, and the storage containers 112 may not be stacked on top of one another within the multi-container frame. Accordingly, while the remainder of this disclosure focuses on stacker frames, this is not to be considered as limiting and the present invention relates to any form of multi-container frame configured to accommodate a plurality of storage containers 112 within it. In the description that follows, we will therefore refer to stacker frames 500 and to storage containers 504, wherein the storage containers 504 are configured for placing (e.g. stacking) in the stacker frames 500. As the reader will understand, the storage containers 504 may be the same as storage containers 112.

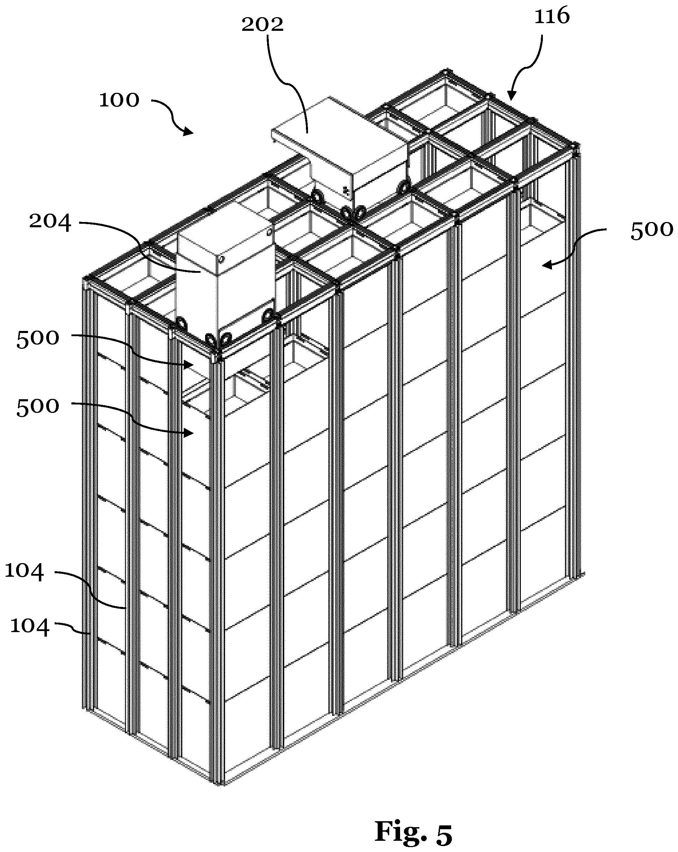

Turning now to Fig. 5, this figure shows a subsection of the automated storage and retrieval system shown in Fig. 1. A portion of the grid 100 can be seen together with robotic container-handling vehicles, robotic vehicles, or robots 202, 204 operating on the rail system 116. In the system shown in Fig. 5, multi-container frames 500 are stacked on top of each other in each column of the grid. As noted above, in this implementation the multi-container frames 500 are all stacker frames 500, in which storage containers 112 are stored one on top of the other. Accordingly, for simplicity, the phrase "stacker frame" will be used hereafter. However, the following description applies to any form of multi-container frame.

As can be seen from Fig. 5, one of the stacker frames 500 is in the process of being lifted by robot 204. This is performed in a similar manner as discussed above in relation to the containers 112 of Fig. 1. Further details of how stacker frames 500 are lifted will be described below.

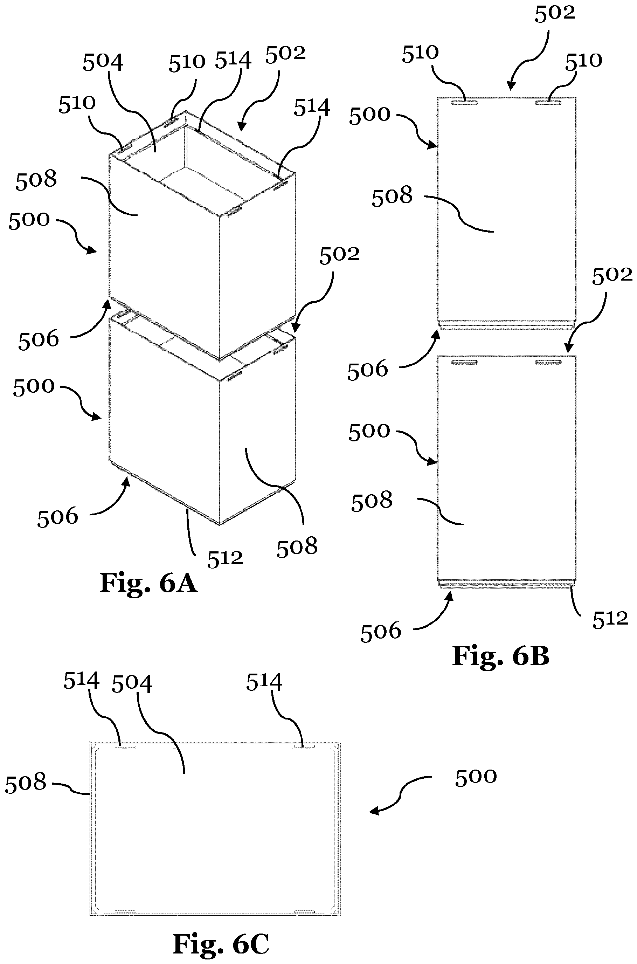

Example stacker frames 500 are shown in more detail in Figs. 6A to 6C. Each of the stacker frames 500 has an open top end 502 for allowing a storage container 504 to pass into the stacker frame 500. As already noted, each stacker frame 500 is configured to accommodate a plurality of storage containers 504 stacked one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Figure 1. For example, the stacker frame 500 may be specifically configured for storing a plurality of storage containers 504, for example up to three storage containers 504, therein in a stacked arrangement.

Each stacker frame 500, comprises a bottom end 506, for supporting a lowermost storage container 504. In the present example, side walls 508 extend between the bottom end 506 and the top end 502, although in other examples stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Figure 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

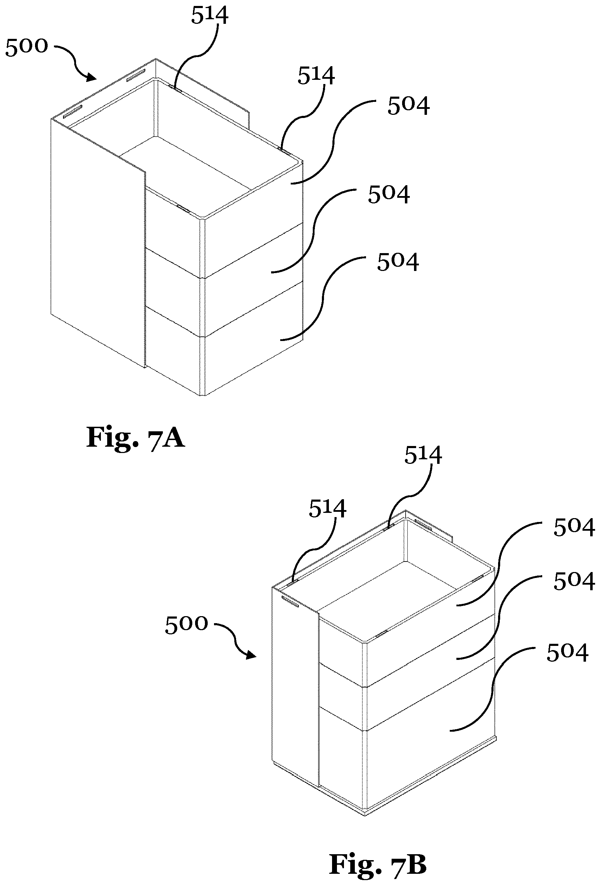

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary bins or containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other mechanisms maybe provided additionally or alternatively.

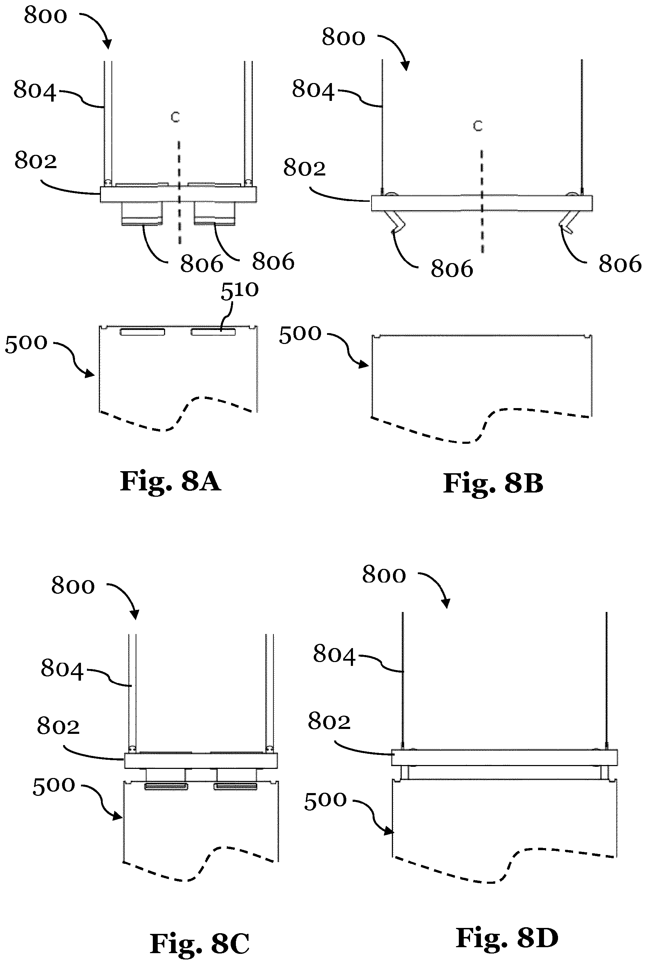

Figs. 8A, 8B, 8C, 8D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. It may also be used in the lifting device of any of the robots 1300, 1600, 1800, 1900 and 2000 described below. The lifting device 800 is configured to engage with a stacker frame 500 such that the stacker frame 500 may be lifted or lowered into or out of a column 102 of the grid 100.

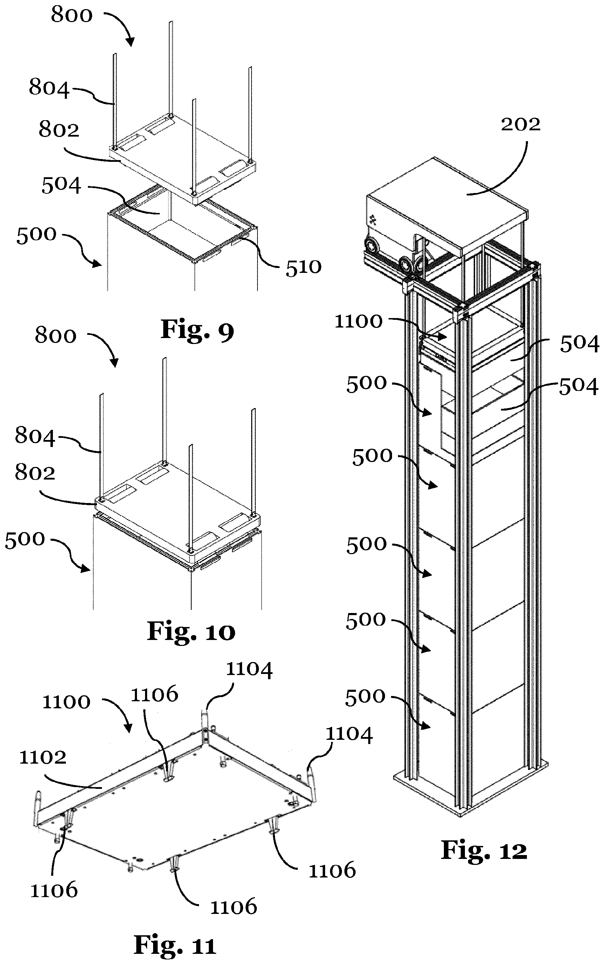

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches 806 are an example implementation of a gripping device, such as gripping device 308 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. It may also be used in the lifting device of any of the robots 1300, 1800, 1900 and 2000 described below. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle to lift a stacker frame 500 or container 504 from a stacker frame have been described with reference to Figs. 8A-12. However, it will be appreciated that these mechanisms are merely exemplary. Other mechanisms can be used, and both stacker frames 500 and containers 504 may be modified appropriately to accommodate an alternative form of lifting mechanisms.

### Description of specific improvements - mixed system

Fig. 5 shows an automated storage and retrieval system in which the three-dimensional grid consists exclusively of columns configured to receive stacker frames 500 therein. Advantages with such an automated storage and retrieval system have been described above.

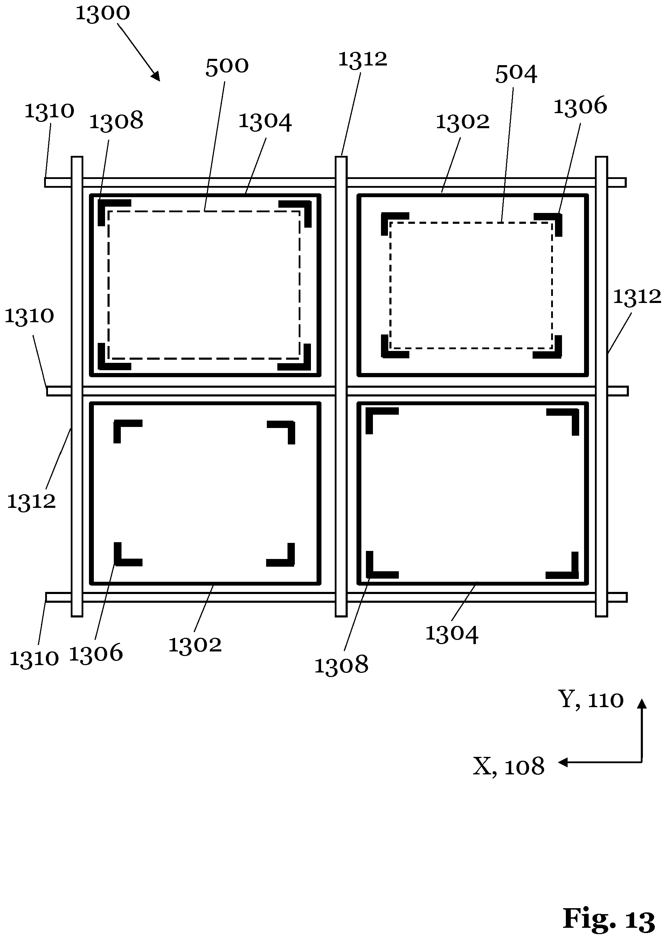

The inventors have found that it can be advantageous to provide an automated storage and retrieval system which the three-dimensional grid includes: columns of a first type configured to receive individually stacked storage containers 504 (i.e. storage containers 504 which are stacked directly on top of one another and not stacked within stacker frames 500) therein; and columns of a second type configured to receive stacker frames 500 therein. Fig. 13 shows a plan view of a three-dimensional grid 1300, which includes columns 1302 of the first type, and columns 1304 of the second type. As shown in Fig. 13, the columns are arranged to form a two-dimensional grid in the X- and Y-directions. The columns extend beneath the two-dimensional grid to thereby form the three-dimensional storage grid 1300. As can be seen, the grid of Fig. 13 comprises a 2×2 grid of columns, including two columns 1302 of the first type, and two columns 1304 of the second type. The columns 1302, 1304 of the first and second types are collectively arranged side-by-side in a uniform two-dimensional grid 1300, such that each column occupies a single unit cell 1301 in the two-dimensional grid. That is to say, the columns are arranged side-by-side in a two-dimensional grid, and extend perpendicular to the two-dimensional grid in order to form the three-dimensional grid. As shown in Fig. 13, the two-dimensional grid may be defined in the X-Y direction, i.e. in the horizontal plane. The columns may therefore extend in the Z-direction 112, i.e. in the vertical direction.

As shown in Fig. 13, the columns 1302 of the first type have an inner dimension that is smaller than the inner dimension of the columns 1304 of the second type. In particular, the columns 1302 of the first type include first support members 1306 which extend the length of the columns 1302 and which are spaced so as to engage outer surfaces of storage containers 504 received therein. In particular, an inner spacing between the first support members 1306 is substantially equal to the outer dimensions of the storage containers 504. A first opening having a first cross-sectional area is defined at the top of each column 1302 between the first support members 1306. On the other hand, the columns 1304 of the second type include second support members 1308 which extend the length of the columns 1304 and which are spaced so as to engage outer surfaces of stacker frames 500 received therein. In particular, an inner spacing between the second support members 1308 is substantially equal to the outer dimensions of the stacker frames 500. A second opening having second cross-sectional area (which is larger than the first cross-sectional area) is defined at the top of each column 1304 between the second support members 1308.

Also shown in Fig. 13 are a plurality of first rails 1310 which extend in the X-direction 108; and a plurality of second rails 1312 which extend in the Y-direction 110. The rails 1310, 1312 may constitute to the rail network 116 as has been described previously. Each unit cell of the two-dimensional grid is defined between an adjacent pair of first rails 1310 and between an adjacent pair of second rails 1312. Because each column, regardless of whether it is a column of a first type 1302 or a column of a second type 1304, occupies a single unit cell defined between adjacent pairs of rails, a vehicle, such as robot 202 or 204, can drive over each and every column, regardless of which type of column it might be. Accordingly, the vehicle retrieve (e.g. lift) individual storage containers 504 from columns 1302 of the first type, and from columns 1304 of the second type.

A first dashed line is illustrated in Fig. 13 to illustrate a storage container 504 received between the first support members 1306 so as to be supported by the first support members 1306. As can be seen, the first cross-sectional area between the first support members 1306 substantially matches the outer dimensions of the storage container 504 such that a stack of storage containers 504 can be supported by the first support members 1306. A second dashed line is illustrated in Fig. 13 to illustrate a stacker frame 500 received between the second support members 1308 so as to be supported by the second support members 1308. As can be seen, the second cross-sectional area between the second support members 1308 substantially matches the outer dimensions of the stacker frame 500 such that a stack of stacker frames can be supported by the second support members 1308.

As the skilled reader will understand, the first and second support members 1306, 1308 may extend the full length of each column. Therefore, each column may have the same inner cross-section along its entire length, extending from an opening at the top of each column.

Fig. 13 shows a 2×2 grid of columns, comprising two columns 1302 of the first type and two columns 1304 of the second type. However, as the reader will understand, the number of columns 1302 of the first type, the number of columns 1304 of the second type, or the total number of columns, may be more than or less than that shown in Fig. 13.

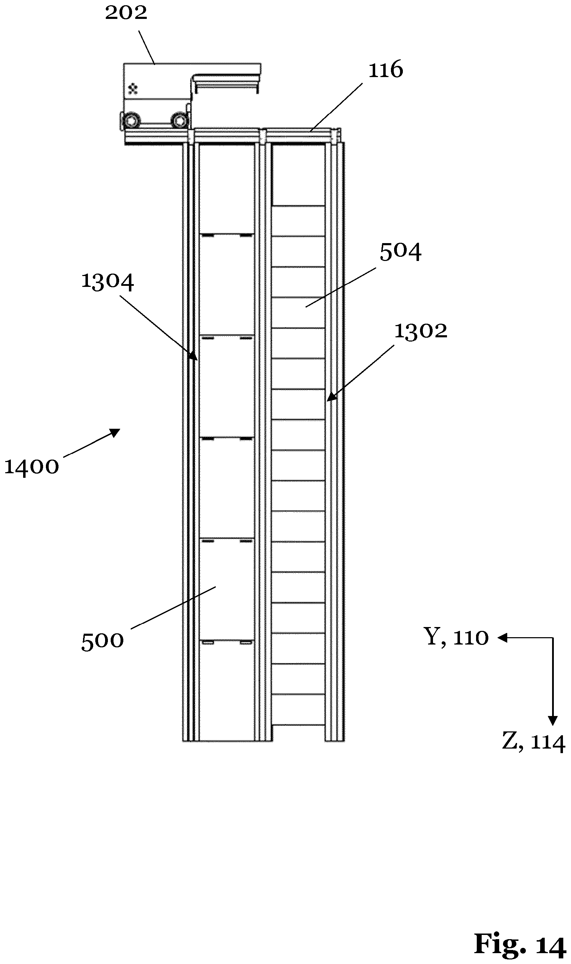

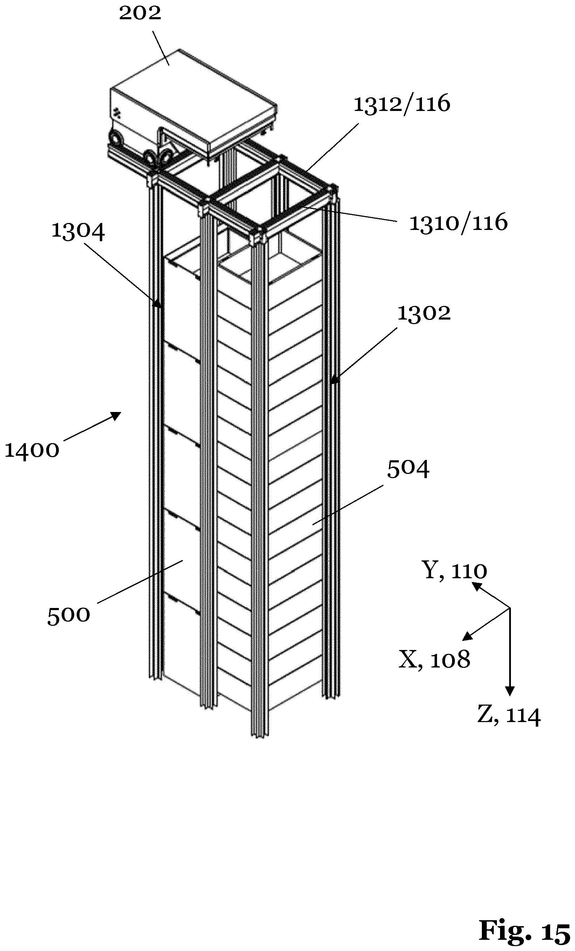

For example, Fig. 14 shows a side view of a 1×2 grid 1400 comprising a single column 1302 of the first type, and a single column 1304 of the second type arranged side-by-side with the column 1302 of the first type. Fig. 15 shows a perspective view of Fig. 14. A 1×2 grid is shown in Figs. 14 and 15 for illustrative purposes. However, as the reader will understand, a grid of any size and shape could be used. As the reader will understand, many more than two columns may in practice be present.

As shown in figs. 14-15, a container handling vehicle of a first type is configured to travel on rails (e.g. rails 116, or rails 1310, 1312) located at the top of the grid 1400. The container handling vehicle of the first type may be a cantilever type robot 202, and is shown located at the top of the grid 1400. However, in other examples, the container handling vehicle of the first type may be an internal cavity robot 204. Hereafter, where a container handling vehicle of a first type is referred to, it is to be understood that the container handling vehicle of the first type may be a robot 202 or a robot 204.

The column 1302 of the first type has a plurality of storage containers 504 stacked directly on top of each other therein. The column 1304 of the second type has a plurality of stacker frames 500 stacked on top of each other therein. Although not visible in Fig. 1, each of the stacker frames 500 may include one or more storage containers 504 stacked therein, e.g. as shown in Figs. 7A-7B.

The container handling vehicle of the first type may comprise a lifting device of a first type for lifting storage 504 containers from columns 1302 of the first type or from columns 1304 of the second type. For example, the lifting device of the first type may comprises grippers of a first type for engaging and lifting storage containers 504. For example, the lifting device of the first type may comprise a lifting device 1100 comprising grippers 1106 as shown in Figs. 11 and 12. Accordingly, the cantilever robot 202 may be configured for lifting storage containers 504 using the grippers 1106. In some examples, the lifting device of the first type may further be configured to lift stacker frames 500, for example may further comprise grippers of a second type for engaging and lifting stacker frames 500. For example, the lifting device of the first type may further comprise latches 806 for engaging and lifting stacker frames 500.

The automated storage and retrieval system may also include a gantry system (not shown in Figs. 14-15) arranged above the grid 1400 and above the rails 116, for example suspended from a ceiling of a building within which the grid 1400 is located. The gantry system may have a container handling vehicle of a second type mounted thereto. The container handling vehicle of the second type may for example comprise a crane, the crane moveable along the gantry system (and hence above three-dimensional grid 1400) in the X-direction 110 and the Y-direction 112.

The container handling vehicle of the second type may comprise a lifting device of a second type for lifting stacker frames from columns 1304 of the second type. For example, the lifting device of the second type may comprise grippers of a second type for engaging and lifting stacker frames. For example, the lifting device of the second type may comprise a lifting device 800 comprising latches 806 as shown in Figs. 8A, 8B, 8C, 8D, 9 and 10. In some examples, the lifting device of the second type may further be configured to lift storage containers 504, for example may further comprise grippers of the first type for engaging and lifting storage containers 504. For example, the lifting device of the second type may further comprise grippers 1106 for engaging and lifting storage containers 504.

By using both a vehicle of the first type and a vehicle of the second type, the speed of managing and reordering storage containers 504 within the grid 1400 may be increased. The vehicle of the second type may be particularly useful where the vehicle of the first type includes only grippers 1106 for lifting storage containers 504, and hence where the vehicle of the first type is not able to lift stacker frames 500. In this case, the vehicle of the first type will lift and move storage containers 504 between first and second columns 1302, 1304, and the vehicle of the second type will lift and move stacker frames 500 between second storage columns 1304.

As has been described, in at least one example, each of the vehicle of the first type and the vehicle of the second type may be configured for lifting storage containers 504 and for lifting stacker frames 500. In other examples, the vehicle of the first type may be dedicated for lifting storage containers 504, and the vehicle of the second type may be dedicated for lifting stacker frames 500. In yet other examples, vehicles of the second type may be dispensed with, and only vehicles of the first type may be used. In such an example, the vehicles of the first type may be configured for lifting both storage containers 504 and stacker frames 500.

As shown in Figs. 14-15, the column 1302 of the first type is the same height as the column 1304 of the second type. Accordingly, the rails span the columns 1302, 1304 of the first and second types, and the container handling vehicles can drive over both types of column.

### Description of specific improvements - hybrid system

In the preceding description, a mixed system has been described in which the three-dimensional grid includes both columns 1302 of the first type and columns 1304 of the second type, and in which a vehicle of a first type (e.g. robot 202) can travel over both types of column in the grid. The columns of the different types in the mixed system are arranged side-by-side (the grid therefore being mixed).

In a different arrangement, as will be described in the following description, a hybrid system is provided. A hybrid system is similar to the mixed system in that it includes columns 1302 of the first type and columns 1304 of the second type. However, in the hybrid system, the columns 1302 of the first type are arranged in a first storage area, and the columns 1304 of the second type are arranged in a second storage area. The first and second storage areas are adjacent one another, with a buffer area positioned between the first and second storage areas for moving storage containers between the first and second storage areas.

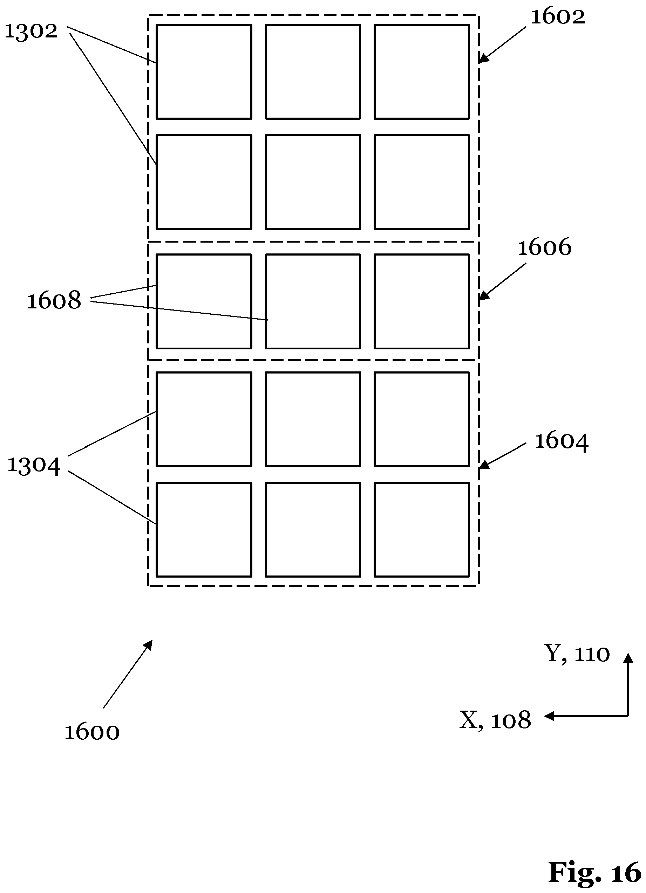

Fig. 16 is a schematic plan view illustrating the concept of a hybrid storage system 1600 according to the present disclosure. The hybrid storage system 1600 includes a first storage area 1602, which includes a three-dimensional grid comprising plurality of storage columns 1302 of the first type; a second storage area 1604, which includes a three-dimensional grid comprising a plurality of storage columns 1304 of the second type; and a buffer area 1606, which includes a plurality of buffer cells 1608. The buffer area 1606 is provided between the first storage area 1602 and the second storage area 1604. In the example of Fig. 16, the first storage area 1602 comprises a three-dimensional grid comprised of a 2×3 grid of storage columns 1302 of the first type; the second storage area 1604 comprises a three-dimensional grid comprised of a 2×3 grid of storage columns 1304 of the second type; and the buffer area 1606 comprises a 1×3 grid of buffer cells 1606. However, as the skilled reader will understand, each area may contain more than the depicted number of columns or cells, or fewer than the depicted number of columns or cells.

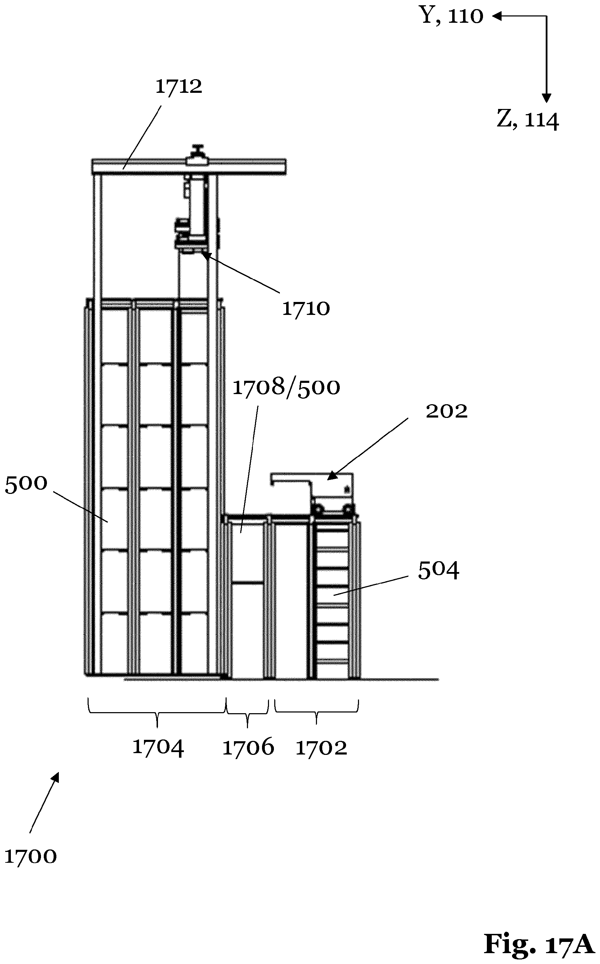

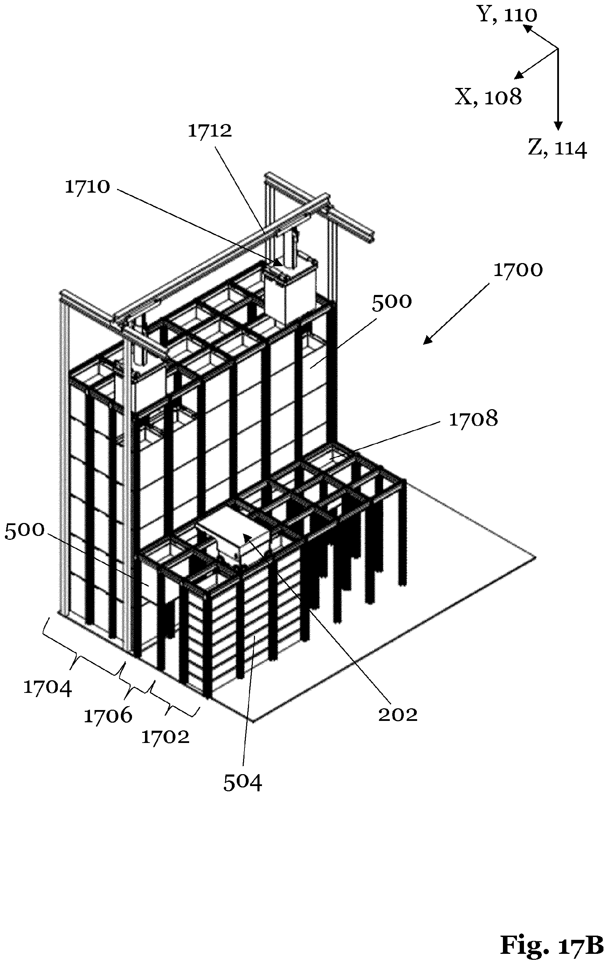

Fig. 17A shows a side-view of a hybrid storage system 1700 according to a further example of the present disclosure. The hybrid storage system 1700 includes a first storage area 1702 including first columns 1302, a second storage area 1704 including second columns 1304, and a buffer area 1706 comprising buffer cells 1708 with stacker frames 500 therein. Fig. 17B shows a perspective view of the hybrid storage system 1700.

As with preceding examples, the columns 1302 of the first type are configured to store storage containers 504 stacked directly on top of one another. The columns 1304 of the second type are configured to store stacker frames 500 stacked on top of one another. Each buffer cell, on the other hand, comprises a single bucket configured to receive a single stacker frame 500 therein. Accordingly, a stacker frame 500 can be moved from a column 1304 of the second type, and placed in a bucket of a respective one of the buffer cells 1708. Once placed in the bucket, the stacker frame 500 can be filled with storage containers 504 from columns 1302 of the first type, or storage containers 504 can be removed from the stacker frame and moved to columns 1302 of the first type. Accordingly, the buffer cells 1708 in the buffer area 1706 provide for movement of storage containers between the first area 1702 and the second area 1704. As shown in Fig. 17A-17B, this is particularly beneficial where the columns 1304 of the second type are taller than the columns 1302 of the first type.

As shown in Figs. 17A and 17B, a vehicle of the first type (depicted as a robot 202, but as described above could alternatively be a robot 204) is provided to travel on rails 116 (not shown) on the first storage area 1702 and the buffer area 1706. A vehicle of the second type (depicted as a crane 1710) is provided to travel on a gantry system 1712, the gantry system 1712 extending above the second area 1704 and above the buffer area 1706. Accordingly, the vehicle of the first type is operable to lift storage containers 504 from the first columns 1302 and move them to the buffer area 1706; and to lift storage containers 504 from the buffer area 1706 and move them to the first columns 1302. The vehicle of the second type is operable to lift stacker frames 500 from the second columns 1304 and move them to the buffer area 1706; and to lift stacker frames 500 from the buffer area 1706 and move them to the second columns 1304.

The vehicle of the first type is configured for lifting storage containers. That is to say, the vehicle of the first type comprises the lifting device of the first type, as has been described previously. In this example, the vehicle of the first type may not be able to lift stacker frames 500.

The buffer area 1706 includes a plurality of buffer cells 1708, arranged side-by-side (similarly to the columns in the respective storage areas). Each buffer cell 1708 is configured to receive a single stacker frame 500 therein. Therefore, stacker frames 500 can be moved between the columns 1304 of the second type in the second area 1704 and the buffer cells 1708 in the buffer area 1706. Once a stacker frame 500 has been placed in a buffer cell 1708, storage containers can be moved between the stacker frame 500 and the first columns 1302 by the vehicle of the first typ. In the depicted example, an upper surface of the buffer cells is level with an upper surface of the columns 1302 of the first type.

The vehicle of the second type (depicted in Figs. 17A-17B as a crane 1710 suspended from gantry 1712) is configured for lifting stacker frames. That is to say, the vehicle of the second type comprises the lifting device of the second type, as has been described previously. In one example, the vehicle of the second type is not be able to lift storage containers 504. In another example, the vehicle of the second type is able to lift storage containers 504 as well as stacker frames 500.

The vehicle of the second type is moveable along the gantry system 1712 in the X direction 108 and in the Y direction 110. Accordingly, the vehicle of the second type is operable to lift individual stacker frames 500 from columns 1304 of the second type and to move them to an empty buffer cell 1708; and to lift stacker frames 500 from buffer cells 1708 and to return them to columns 1304 of the second type.

As can be seen from Figs. 17A and 17B, the first storage area 1702 comprises columns 1302 of a first height; and the second storage area 1704 comprises columns 1304 of a second height, which is taller than the first height. The columns 1304 of the second type maybe taller due to the larger height capacity of stacks of stacker frames 500. In such a system, by providing vehicles of the two types as has been described above, stacker frames 500 can be transported to and from the buffer area 1706 by the vehicle of the second type, and storage containers 504 can be placed in and removed from stacker frames 500 in the buffer area 1706 by the first vehicle. In other words, the buffer area 1706 provides for movement of storage containers 504 between the first and second storage areas.

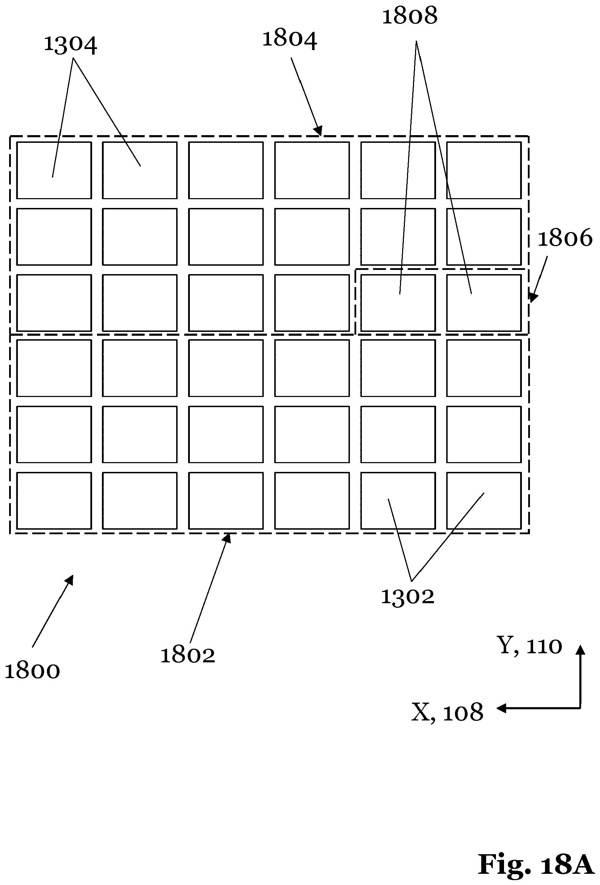

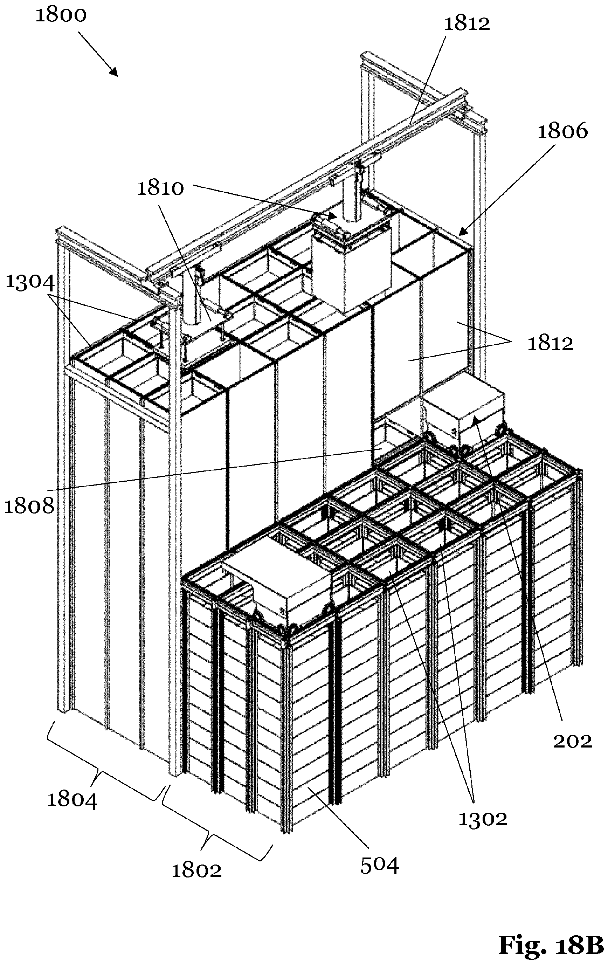

Fig. 18A shows a plan view of a storage system 1800 comprising a first storage area 1802, a second storage area 1804, and a buffer area 1806 located between the first storage area 1802 and the second storage area 1804, according to a further example. Fig. 18B shows a perspective view of the same storage system 1800. As with the example of Fig. 17, the first storage area 1802 includes storage columns 1302 of the first type; and the second storage area 1804 includes storage columns 1304 of the second type. In the example of Fig. 18, the buffer area 1806 includes just two buffer cells 1808 for moving storage containers 504 between the first storage area 1802 and the second storage area 1804. Each buffer cell 1808 is the same as the buffer cells in Figs. 17A-17B. the container handling vehicles of the Figs. 18A-18B example may be the same as the container handling vehicles of the Figs. 17A-17B examples.

In the example of Fig. 18, two vehicles of the first type (robots 202 in the depicted arrangement) are provided in the first storage area 1802, and two vehicles of the second type (cranes 1810 in the depicted arrangement) are provided in the second storage area 1804. Above each buffer cell 1808, a vertical tube-like structure 1812 is provided. The each vertical tube-like structure acts to guide the lifting device of the second type down towards the buffer cell.

As with the previous examples, the rail network 116, e.g. rails 1310 and 1312, extend over the first area 1802 and optionally over the buffer area 1806. The gantry system 1812 extends over the second area 1804 and over the buffer area 1806.

Each crane 1810 is moveable along the gantry system 1810 which is located above the second storage area 1804. Each crane 1810 includes a lifting frame which includes latches 806 for lifting stacker frames 500.

Each robot 202 is moveable along rails which extend along the upper surface of the first storage area 1802. Each robot 202 includes a lifting frame which includes grippers 1106 for lifting storage containers 504.

As with the system of Fig. 17, each crane 1810 is operable to move stacker frames 500 between storage columns 1304 of the second type and the buffer cells 1808; and each robot 202 is operable to move storage containers 504 between storage columns 1302 of the first type and the buffer cells 1808. Accordingly, as with the system of fig. 17, the buffer area 1806 provides for communication of storage containers 504 between the first storage area 1802 and the second storage area 1804.

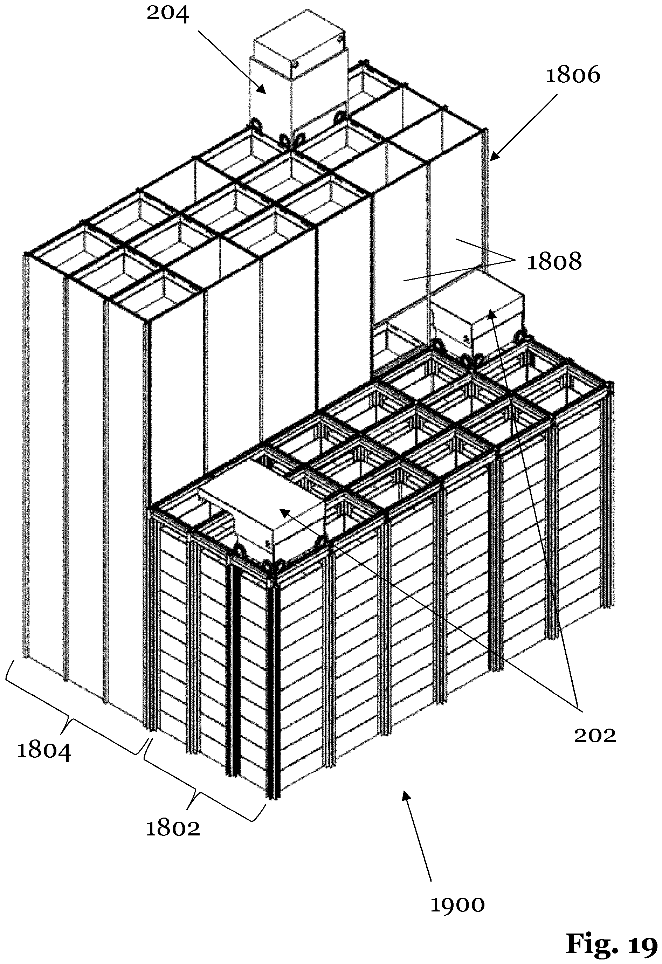

Fig. 19 shows a modification of the system 1800 of Fig. 18. The difference from the system of Figs. 18A-18B is as follows. The vehicle of the second type in this example comprises a robot, for example an internal cavity robot 204, rather than a crane. Accordingly, the gantry system 1812 is also dispensed with. Therefore, in this example, the vehicle of the first type comprises a robot 202, and the vehicle of the second type comprises a robot 204. In other examples, the vehicle of the first type may comprise a robot 204, and the vehicle of the second type may comprise a robot 202. In either case, the vehicle of the first type comprises the lifting device of the first type for moving storage containers 504, and the vehicle of the second type comprises the lifting device of the second type for moving stacker frames 500.

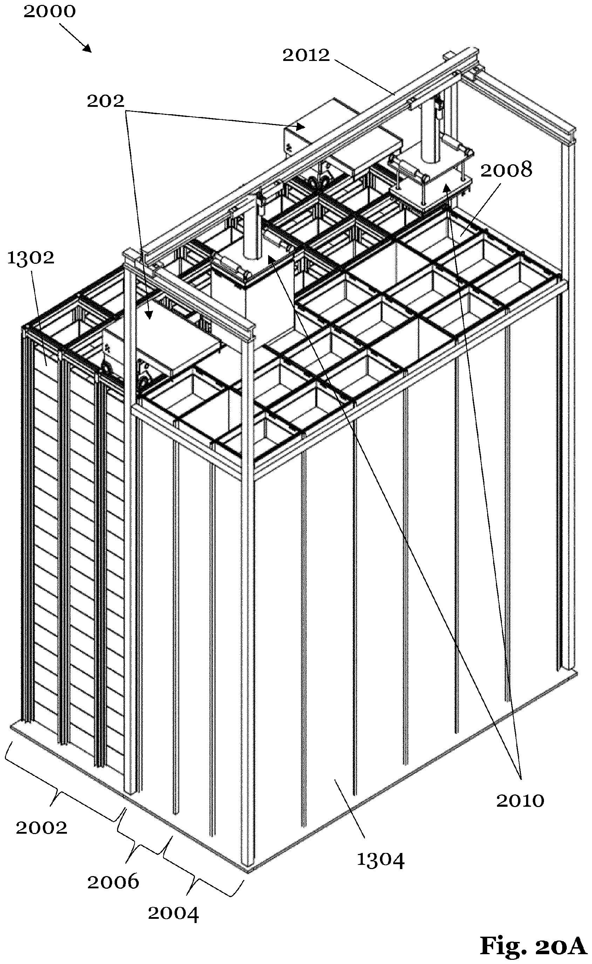

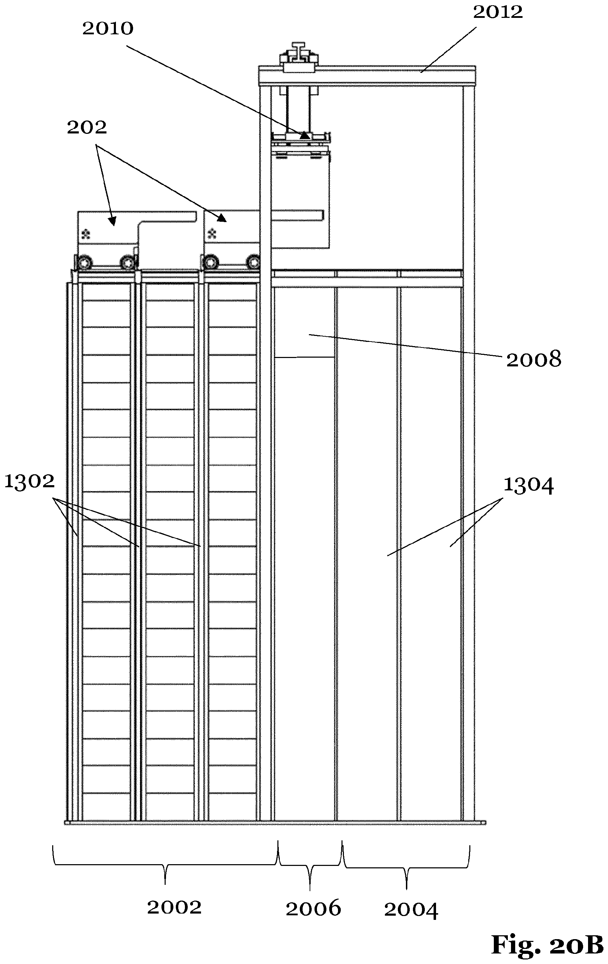

Fig. 20A shows a perspective view of a hybrid system 2000 according to a further example. Fig. 20B shows a side-view of the same hybrid system 2000. The hybrid system 2000 of Figs. 20A-20B is similar to the system 1700 shown in Figs. 17A-17B, save for the fact that all of the columns in the system 2000 are all of the same height. That is to say, the columns 1302 of the first type are the same height as the columns 1304 of the second type. The hybrid system 2000 according to Figs. 20A-20B is otherwise similar to the system 1700 of Figs. 17A-17B. In particular, the system 2000 of Figs. 20A-20B includes a first storage area 2002 which includes columns 1302 of the first type, a second storage area 2004 which includes columns 1304 of the second type, and a buffer area 2006 between the first and second storage areas which includes buffer cells 2008. The first storage area 2002 is serviced by vehicles of a first type (exemplified as robots 202), and the second storage area 2004 is serviced by vehicles of a second type (exemplified as cranes 2010 mounted on a gantry system 2012).

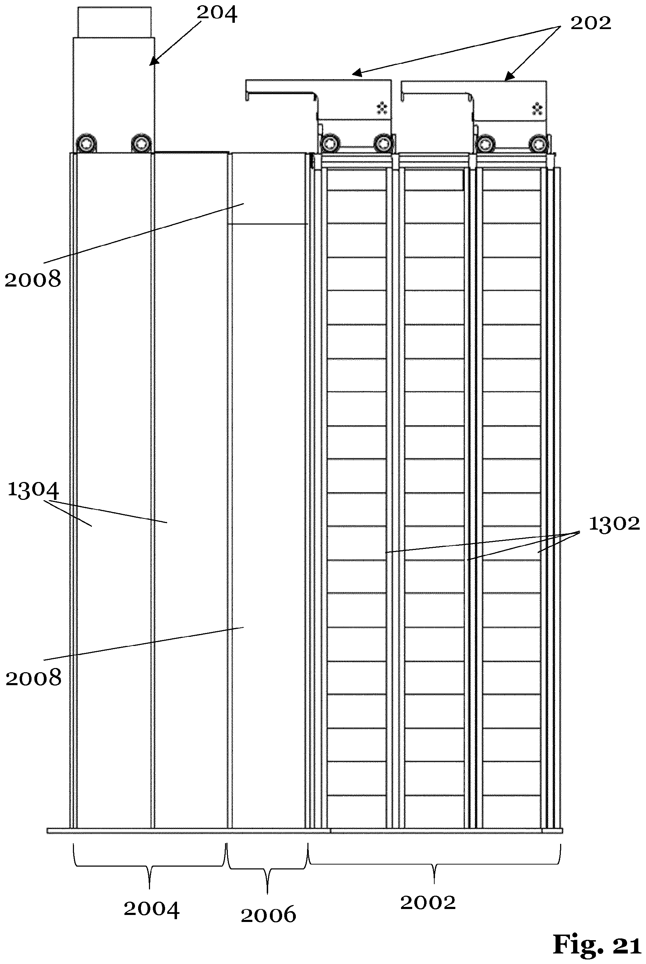

Fig. 21 shows a hybrid system 2100 according to another example of the present disclosure. The system 2100 of Fig. 21 is similar to the system 2000 of Figs. 20A-20B, save for the fact that the crane 2010 and associated gantry system 2012 are dispensed with. In their place, the vehicle of the second type comprises a robot 202/204 (robot 204 in the depicted example), similarly to that described for the system 1900 of Fig. 19.

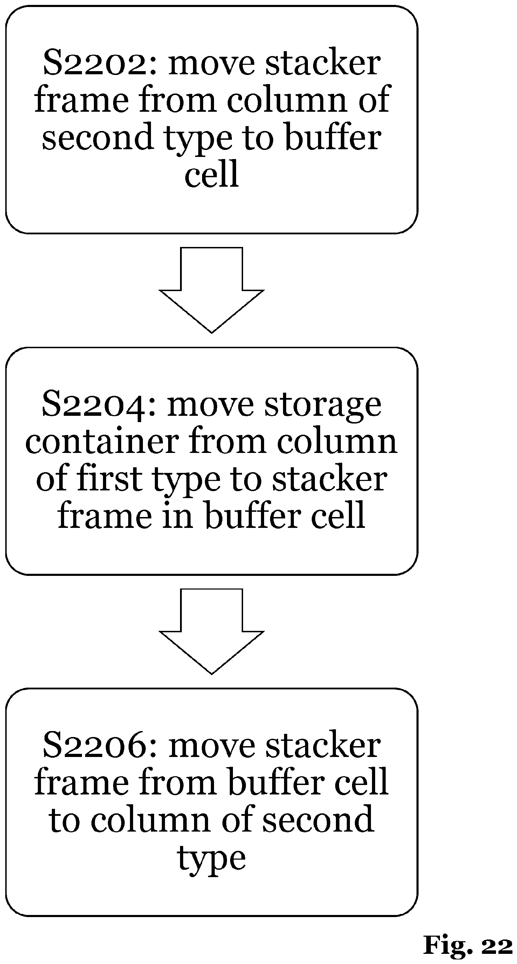

Fig. 22 shows a method of operating a system according to any of Figs. 16-21.

At step S2202, the vehicle of the second type is caused to lift a stacker frame 500 from a storage column 1304 of the second type, and to deposit the stacker frame 500 in a buffer cell. Thereby, the stacker frame 500 is moved from the second storage area to the buffer area by the vehicle of the second type. The stacker frame 500 may be empty, may be partially filled with storage containers 504, or may be fully filled with storage containers 504.

At step S2204, the vehicle of the first type is caused to lift a storage container 504 from a storage column 1302 of the first type, and to deposit the storage container 504 in the buffer cell in which the stacker frame 500 was deposited in S2202. Thereby, the storage container 504 is moved from the first storage area to the buffer area by the vehicle of the first type. In an alternative situation, the vehicle of the first type is caused to lift a storage container 504 from the stacker frame 500 in the buffer cell, and to deposit the storage container 504 in a storage column 1302 of the first type. Thereby, the storage container 504 is moved from the buffer area to the first storage area by the vehicle of the first type.

Step S2204 may be repeated a number of times, until the required storage containers are present in the stacker frame 500 and the stacker frame 500 is therefore ready to be returned to the second storage area.

At step S2206, the vehicle of the second type is caused to lift the stacker frame 500 from the buffer cell, and to deposit the storage container 504 in a column of the second type. The stacker frame 500 may be returned to the same column 1304 of the second type from which it was originally retrieved, or alternatively it may be returned to a different column 1304 of the second type. In either case, the stacker frame 500 is thereby returned to the second storage area.

Instructions for implementing the method of Fig. 22 may be stored on a computer-readable medium, for example a non-transitory computer readable medium such as static memory 406, and may be implemented by processor 402. The vehicles of the first and second type may in some examples be controlled from a central control center. That is to say, the method of Fig. 22 may be implemented from central location, e.g. by sending instructions to control the vehicles from the central location.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage system comprising a three-dimensional grid for storing storage containers therein and a rail network, the rail network provided for movement of a storage container handling vehicle along the three-dimensional grid, the three-dimensional grid comprising:
at least one storage column of a first type extending vertically from the rail network, each of the at least one storage columns of the first type configured to receive individual storage containers therein; and
at least one storage column of a second type extending vertically from the rail network, each of the at least one storage columns of the second type configured to receive multi-container frames for pluralities of storage containers therein;
wherein each of the at least one storage columns of the first type comprises a first opening, the first opening having a first cross-sectional area configured for supporting individual storage containers therein; and
wherein each of the at least one storage columns of the second type comprises a second opening, the second opening having a second cross-sectional area which is larger than the first cross-sectional area configured for supporting multi-container frames therein.

2. The storage system of claim 1, wherein each of the at least one storage columns of the second type is configured to receive stacker frames for stacks of storage containers therein, wherein the second cross-sectional area is configured for supporting stacker frames, wherein the storage columns of the first and second type are collectively arranged in a two-dimensional grid having unit cells of uniform size, wherein each of the at least one storage columns of the first type occupies a single unit cell of the two-dimensional grid, and wherein each of the at least one storage columns of the second type occupies a single unit cell of the two-dimensional grid.

3. The storage system of claim 2, wherein the rail network comprises a plurality of first rails each extending in a first direction, and a plurality of second rails each extending in a second direction that is perpendicular to the first direction, the first rails and the second rails collectively defining the two-dimensional grid, and wherein each of the at least one storage columns of the first type, and each of the at least one storage columns of the second type, is located between a respective pair of adjacent first rails and between a respective pair of adjacent second rails.

4. The storage system of any preceding claim, further comprising a container handling vehicle of a first type moveable along the three-dimensional grid, the container handling vehicle of the first type configured for retrieving storage containers from columns of the first type, and optionally further configured for retrieving storage containers from columns of the second type.

5. The storage system of claim 4 when dependent on claim 3, wherein the container handling vehicle of the first type travels along the rails, and wherein the rail network optionally spans across each of the unit cells.

6. The storage system of claim 4 or claim 5, further comprising a container handling vehicle of a second type moveable over the top of the three-dimensional grid, the container handling vehicle of the second type configured for lifting multi-container frames from columns of the second type, and optionally further configured for lifting storage containers from columns of the first or second type, optionally wherein the container handling vehicle of the second type is suspended from a gantry system located above the three-dimensional grid.

7. The storage system of any preceding claim, wherein the storage columns of the first and second types are of uniform height.

8. The storage system according to any of claims 1 to 3, comprising a plurality of storage columns of the first type, and a plurality of storage columns of the second type, wherein the storage columns of the first type are located in a first area, wherein storage columns of the second type are located in a second area located adjacent to the first area, and wherein the three-dimensional grid further comprises a buffer area located between the first area and the second area for moving storage containers between the first area and the second area, the buffer area comprising at least one buffer cell configured to receive a multi-container frame and/or storage container therein.

9. The storage system of claim 8, further comprising:
a container handling vehicle of a first type, the container handling vehicle of the first type configured for lifting storage containers from columns of the first type; and
a container handling vehicle of a second type configured for lifting multi-container frames from columns of the second type;
wherein the container handling vehicle of the first type is configured for movement over the first area and optionally also for movement over the buffer area; and
wherein the container handling vehicle of the second type is configured for movement over the second area and optionally also for movement over the buffer area.

10. The storage system of claim 9, wherein the rail network spans the first area and optionally further spans the buffer area, and wherein the container handling vehicle of the first type is configured for movement on the rail network.

11. The storage system of claim 9 or claim 10, further comprising a gantry system or a separate rail network which spans the second area and optionally further spans the buffer area, wherein the second vehicle is configured for movement on the gantry system or separate rail network.

12. The storage system according to any of claims 8 to 11, wherein the storage columns of the first type are of a first height, and wherein the storage columns of the second type are of a second height which is different from the first height, for example a second height which is taller than the first height; and/or wherein an opening in an upper surface of the at least one buffer cell is level with the openings of the storage columns of the first type, or is level with the openings of the storage columns of the second type.

13. The storage system of any preceding claim, further comprising a storage container received within a column of the first type, and further comprising a multi-container frame received within a column of the second type, wherein the multi-container frame is configured for receiving a plurality of storage containers therein;
optionally further wherein the first cross-sectional area of the first opening substantially matches an outer dimension of the storage container, such that the storage container is supported by the first storage column; and/or
optionally further wherein the second cross-sectional area of the second opening substantially matches an outer dimension of the multi-container frame, such that the multi-container frame is supported by the second storage column.

14. A method of operating a storage system according to claim 9, the method comprising:
causing the container handling vehicle of the second type to move a multi-container frame from a column of the second type to a buffer cell of the at least one buffer cell;
causing the container handling vehicle of the first type to one of:
move a storage container from the multi-container frame located in the buffer cell to a storage column of the first type; or
move a storage container from a storage column of the first type to the multi-container frame located in the buffer cell; and
causing the container handling vehicle of the second type to move the multi-container frame from the buffer cell to a or the column of the second type.

15. A computer readable medium having instructions stored thereon, the instructions executable by a processor to cause the processor to perform a method according to claim 14.
